# EUROPÄISCHE PATENTSCHRIFT

(11) **EP 2 607 855 B1**
(45) Veröffentlichungstag und Bekanntmachung des Hinweises auf die Patenterteilung: **05.09.2018**
(21) Anmeldenummer: 12008255.7
(22) Anmeldetag: 11.12.2012
(51) Int. Cl.: G01D 4/00, G06F 13/38

(54) **Schaltungsanordnung zur automatischen Buserkennung**
Circuit arrangement for automatic bus detection
Circuit destiné à la détection automatique de bus

(30) Priorität: 21.12.2011 DE 102011121976
(43) Veröffentlichungstag der Anmeldung: 26.06.2013
(73) Patentinhaber: Elster Messtechnik GmbH, 68623 Lampertheim (DE)
(72) Erfinder: Reese, Udo, Dipl.-Ing., 67346 Speyer (DE)
(74) Vertreter: Eickmeyer, Dietmar

(56) Entgegenhaltungen:
- WO-A1-2006/133308
- CN-U- 201 887 744
- US-A1- 2007 239 318

## Beschreibung

Die Erfindung betrifft eine Schaltungsanordnung zur automatischen Buserkennung von an ein Bussystem angeschlossenen Busmastern, welche zur Datenübertragung unterschiedliche Busprotokolle verwenden, nach dem Oberbegriff des Patentanspruchs 1 sowie eine Verwendung der Schaltungsanordnung in einer Einheit zur Erfassung von physikalischen Größen, insbesondere in einem Verbrauchszähler, beispielsweise in einem elektronischen Wärmemengenzähler, Wasserzähler, elektronischen Stromzähler oder Gaszähler zur Erfassung von Energie- oder Fluidmengen.
Die Erfassung der Verbrauchsdaten, insbesondere von Energie- oder Fluidmengen mittels Wasser-, Gas-, Wärme- oder Elektrizitätszählern durch Abrechnungsunternehmen erfolgt weitestgehend über Kommunikationsverbindungen, welche die Verbrauchszähler mit den Vorsorgungsunternehmen oder Abrechnungsunternehmen verbinden.
Ein einfaches Kommunikationssystem zur Verbrauchsdatenerfassung mit der Gebäudeleittechnik wird durch das sogenannten M-Busprotokoll (Metering Bus) realisiert. Die Datenübertragung der Verbrauchsdaten über dieses Feldbusprotokoll erfolgt seriell auf einer verpolungssicheren Zweidrahtleitung von den angeschlossenen elektronischen Verbrauchszählern, die als Slave arbeiten zu einem Mastergerät, welches die Verbrauchsdaten erfasst und gegebenenfalls weiterverarbeitet.

Der Master fragt dazu über den Bus die Zähler ab, wobei die Datenübertragung vom Master zum Slave über einen Wechsel des Spannungspegels dahingehend erfolgt, dass eine logisch 1 bei Umark = 36V und eine logisch 0 bei Uspace = 24V gesendet wird.

Der Slave antwortet dem Master über den Wechsel seines Strompegels, wobei eine logisch 1 bei Imark ≤ 1,5mA und eine logisch 0 bei Ispace = Imark+ 11...20mA gesendet wird.

Der M-Bus ist als eigenständiger Standard in der Norm DIN EN 13757-2-2005 sowohl für die Verwendung als Zweidraht- Bus als auch für die Funkübertragung der Verbrauchsdaten beschrieben.

Im Anwendungsbereich der Fernauslesung der Verbrauchszähler wird der M-Bus vielerorts durch preiswerte Funksysteme verdrängt, welche auf der Basis des sogenannten L- Busprotokolls (Low-voltage Bus) arbeiten, welches in der DIN EN 13757-6-2005 beschrieben ist. Dabei können Auslesegeräte angeschlossen werden, welche nicht den hohen M-Bus-Pegel liefern müssen. Die Bitcodierung entspricht der des M-Busses. Die Bus-Speisespannung beträgt 4,8V bis 15V und wird üblicherweise vom Master geliefert.

Beim L- Bus erfolgt die Datenübertragung vom Master zum Slave über einen Wechsel des Spannungspegels dahingehend, dass eine logisch 1 mit Umark ≥ Umark - 1V und eine logisch 0 mit Uspace = Umark - 3V gesendet wird.

Der Slave antwortet dem Master über den Wechsel seines Strompegels, wobei eine logisch 1 bei Imark ≤ 0,5mA und eine logisch 0 bei Ispace = Imark + 3...6mA gesendet wird.

Die gegenwärtig eingesetzten Verbrauchszähler weisen zur Kommunikation mit dem daran angeschlossenen Master entsprechend ihrer vorgesehenen Verwendung entweder eine Schnittstelle auf, welche die Kommunikation gemäß dem M-Bus-Protokoll ermöglicht oder eine Schnittstelle, welche zur Kommunikation gemäß dem L-Busprotokoll vorgesehen ist. Soll auf ein anderes Kommunikationsprotokoll umgestellt werden, ist zumindest ein Austausch der Schnittstelle erforderlich. Jedoch wird oft auch der gesamte Verbrauchszähler ausgetauscht.

Schaltungsanordnungen zur automatischen Buserkennung sind beispielsweise aus der WO 2006133308 A1 bekannt.

Der Erfindung liegt demgemäß die Aufgabe zugrunde, eine Schaltungsanordnung, auch M/L- Bus Slave genannt, anzugeben, welche eine automatische Buserkennung für eine Einheit zur Erfassung von physikalischen Größen, insbesondere in einem Verbrauchszähler zur Erfassung von Energie- oder Fluidmengen, bereitstellt und die Datenübertragung gemäß dem jeweils anliegendem Busprotokoll ermöglicht. Die erfindungsgemäße Schaltungsanordnung ist somit dafür vorgesehen, die an den Verbrauchszähler angeschlossene Bus-Master-Hardware zu detektieren.

Diese Aufgabe wird erfindungsgemäß mit den in Anspruch 1 angegebenen Merkmalen gelöst. Vorteilhafte Ausgestaltungen, Verbesserungen der erfindungsgemäßen Messvorrichtung sowie eine Verwendung der Schaltungsanordnung in einem Verbrauchszähler, beispielsweise in einem elektronischen Wärmemengenzähler, Wasserzähler, elektronischen Stromzähler oder Gaszähler sind in weiteren Ansprüchen und in der Beschreibung angegeben.

Vorzugsweise ist die erfindungsgemäße Schaltungsanordnung, auch Schnittstellenmodul genannt, in einem als Slave arbeitenden Verbrauchszähler integriert, wobei der Verbrauchszähler zur Datenübertragung mit einem Mastergerät zusammenarbeitet, welches die Verbrauchsdaten erfasst und gegebenenfalls weiterverarbeitet.

Der erfindungsgemäße M/L- Bus Slave ist in vorteilhafter Weise für die Datenübertragung sowohl gemäß dem M-Busprotokoll nach der DIN EN 13757-2-2005 als auch für die Datenübertragung gemäß dem L-Busprotokoll nach der DIN EN 13757-6-2005 ausgelegt ohne dass zusätzliche Änderungen der elektronischen Komponenten in der Schaltungsanordnung notwendig sind.

Erfindungsgemäß wird der Typ des am M/L- Slave anliegendem Busprotokolls automatisch mittels einer in der Schaltungsanordnung vorgesehenen Busdetektionseinheit erkannt und vom M/L- Slave als Ausgangssignal, auch LM_DETECT genannt, einem Eingang (Mikrocontrollereingang) der Einheit zur Erfassung von physikalischen Größen, insbesondere einer in einem elektronischen Verbrauchszähler befindlichen Verarbeitungseinheit (Mikrokontroller) zur weiteren Verarbeitung bereitgestellt.

Die erfindungsgemäße Schaltungsanordnung zur automatischen Buserkennung zwischen unterschiedlichen Bussystemen für eine Einheit zur Erfassung von physikalischen Größen, insbesondere in einem Verbrauchszähler zur Erfassung von Energie- oder Fluidmengen, umfasst folgende vier Funktionseinheiten, eine Spannungsversorgungseinheit zur Bereitstellung der Versorgungsspannung und/oder zur Entlastung der Batterieversorgung, eine Empfängereinheit zur Bereitstellung von Signalen des entsprechend anliegenden Busprotokolls an den Mikrocontrollereingang der Einheit zur Erfassung von physikalischen Größen, beispielsweise dem Umschaltsignal Vrxs und das Datenempfangssignal RXD, eine Datensendeeinheit zur Bereitstellung und Weiterleitung der vom Mikrocontroller der nachgeschalteten Einheit bereitgestellten Signale entsprechend dem anliegendem Busprotokolls und das Umschaltsignal Itxs und eines weiteren Signals TXD zum Senden von Daten an den Mikrocontroller der nachgeschalteten Einheit und eine Busdetektionseinheit zur Erkennung des jeweils anliegenden Busprotokolls. Dazu stellt die Busdetektionseinheit dem Eingang der Einheit zur Erfassung von physikalischen Größen ein Ausgangssignal (LM_DETECT) entsprechend dem anliegenden Busprotokolls zur weiteren Verarbeitung bereit.

Wie vorab beschrieben, unterscheiden sich die beiden Bussysteme M- Bus und L- Bus in der jeweils verwendeten Busspeisespannung, welche beim M- Bus 24V bis 42V und beim L- Bus 5V bis 15V beträgt, dem bereitzustellendem Spannungspegel (M-Bus: Umark = 36V, Uspace = 24V, L-Bus: Umark = 5,0V, Uspace = 2,0V) und dem bereitzustellendem Strompegel (M-Bus: Imark ≤ 1,5mA, Ispace = Imark + 11... 20mA, L-Bus: Imark ≤ 0,5mA, Ispace= Imark+ 3...6mA). All diese Parameter werden mittels des erfindungsgemäßen M/L- Bus Slaves zur automatischen Buserkennung angepasst. Auf Grund der vorgegebenen Parameter ist bei der Möglichkeit der Verwendung eines Slave- Bausteins (Verbrauchszählers) für die unterschiedlichen Bussysteme von einer maximalen Busspannung von U_{BUS} = ±50V auszugehen, so dass einige der in der Schaltungsanordnung vorgesehenen elektronischen Bauelemente, wie beispielsweise Dioden und Transistoren, für diese Spannung ausgelegt sein müssen.

Für die Verwendung der erfindungsgemäßen Schaltungsanordnung für M- oder L- Bussysteme ist demzufolge ein Spannungsbereich zwischen 4,8V und 50V vorzusehen. Um die erforderliche Reproduktion der geforderten Signalpegel entsprechend dem angeschlossenem Bussystem zu erreichen. Dazu sind die Funktionseinheiten mit Stromquellen ausgestattet, wodurch ein Minimum von Signaländerungen bei einer Abdeckung der Versorgungsspannung über den weitreichenden Bereich von Vs 4,8 bis 50V gewährleistet ist.

Um die beiden Bussysteme automatisch zu unterscheiden, muss die Spannung Umark gemessen und in einem Bereich zwischen 17V bis 19V detektiert werden. Dazu wird eine Zenerdiode (Z3) mit entsprechenden, vorzugsweise aus Schalttransistoren aufgebauten, Schaltern der Spannungsversorgungseinheit, der Empfängereinheit und der Datensendeeinheit verschaltet.

Die Zener- Diode ist vorzugsweise in der Busdetektionseinheit angeordnet und detektiert die von der Spannungsversorgungseinheit bereitgestellte Spannung unter Nutzung ihres Zener- Stromes zum Schalten der Schalter der Empfängereinheit, der Datensendeeinheit und der Spannungsversorgungseinheit über umschaltbare Referenzwiderstände für die Stromquellen (also der Referenzwiderstände R1, R2, R3 der Schalttransistoren der Schalter) in Verbindung mit den Stromquellen der Spannungsversorgungseinheit, der Empfängereinheit und der Datensendeeinheit.

Eine Stromquelle der Spannungsversorgungseinheit stellt den Strompegel Imark ein. Diese Stromquelle wird nachfolgend als vierte Stromquelle bezeichnet. Dieser wird von der Busdetektionseinheit mit einem weiterem Schaltsignal Iccs für den detektierten Bus entsprechend umgeschaltet.

Erfindungsgemäß schaltet die Busdetektionseinheit den Nennstrom gemäß der DIN EN 13757-6-2005 auf die festgelegten Nenngröße zwischen 3 ... 6mA von Imark.

Der Ruhestrom der vierten Stromquelle wird mit einer weiteren in der Spannungsversorgungseinheit integrierten Stromquelle, nachfolgend auch als fünfte Stromquelle bezeichnet, stabilisiert, um den Einfluss der Stromänderungen von Imark über den Betriebsspannungsbereich zwischen 4,8V und 50V zu stabilisieren.

Die vierte Stromquelle wird vom weiteren Schaltsignal Iccs über einen damit verbundenen Schalter mittels eines parallel zum Schalter angeordneten Schaltwiderstands für das jeweilig erkannte Bussystem umgeschaltet.

Der Spannungspegel Uspace wird mit über einen in der Empfängereinheit angeordneten Spannungsdetektor ermittelt. Die Referenzspannung wird von einer in der Sendeeinheit integrierten Stromquelle, im folgenden auch zweite Stromquelle genannt, stabilisiert und mit einem Schaltsignal oder Umschaltsignal Vrxs, dem in der Empfängereinheit vorgesehenen Schalter mit einem zugeordnetem Schaltwiderstand für das detektierte Bussystem angepasst. Dies gewährleistet eine konstante Detektionsspannung über den gesamten Versorgungsspannungsbereich von 4,8V und 50V.

In der Empfängereinheit ist eine dritte Stromquelle als Pegelumsetzer für das Empfangssignal RXD verwendet. Die dritte Stromquelle ist mit einer Ausgangsschaltung OP zur Anpassung des RXD- Signals auf die vom Mikrocontroller benötigte Spannung Vcc der nachgeschalteten Einheit verbunden.

Die in der Sendeeinheit integrierte erste Stromquelle arbeitet mit der vom Mikrocontroller bereitgestellten Spannung Vcc als Referenzspannung nach bekannter Art und wird vom TXD-Signal des Mikrocontrollers gesteuert. Eine Änderung des Strompegel Ispace gemäß dem detektierten Bussystem, erfolgt über einen vom Schaltsignal Itxs gesteuerten Schalter und seinem zugehörigen Widerstand, die in der Sendeeinheit angeordnet sind.

Die erfindungsgemäße Schaltungsanordnung ermöglicht es in vorteilhafter Weise die nachgeschaltete Einheit zur Erfassung von physikalischen Größen sowohl für die Datenübertragung sowohl gemäß dem M-Bussystem als auch für die Datenübertragung gemäß dem L-Bussystem zu verwenden, ohne dass zusätzliche Änderungen der elektronischen Komponenten notwendig sind.

Insbesondere entfällt der Tausch der Verbrauchszählereinheiten, wenn die Datenübertragung vom M- Bussystem auf das L- Bussystem umgestellt werden soll. Auch reduzieren sich die Produktionspalette und die Lagerhaltung, da nur noch ein einziges Gerät für die Datenübertragung gemäß M- Bus- oder L- Bussystem benötigt wird.

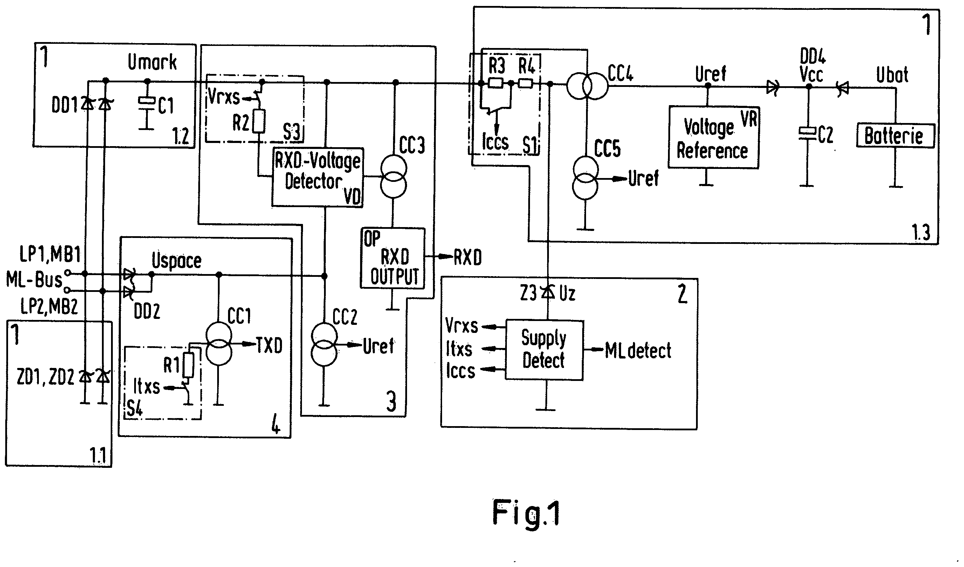

In der nachfolgenden Beschreibung zur **Fig.** 1 werden die Funktionen, die Dimensionierungen und der Aufbau der einzelnen Einheiten näher erläutert sowie vorteilhafte Ausgestaltungen, Verbesserungen und weitere Vorteile der Erfindung näher erläutert und beschrieben.

**Fig.** 1 zeigt eine beispielhafte schematische Darstellung der erfindungsgemäßen Schaltungsanordnung zur automatischen Buserkennung und Datenübertragung gemäß eines M- Bussystem oder eines L- Bussystem für eine Einheit zur Erfassung von physikalischen Größen, insbesondere in einem Verbrauchszähler zur Erfassung von Energie- oder Fluidmengen, nachfolgend auch. Slave genannt.

Die erfindungsgemäße Schaltungsanordnung zur automatischen Buserkennung zwischen zwei unterschiedlichen Bussystemen und zur Datenübertragung gemäß dem jeweils anliegendem Bussystem ist in einem Verbrauchszähler zur Erfassung von Energie- oder Fluidmengen integriert und umfasst vier Funktionseinheiten, eine Spannungsversorgungseinheit 1 (1.1, 1.2, 1.3) zur Bereitstellung der Versorgungsspannung, eine Busdetektionseinheit 2 zur Detektion des jeweils angeschlossenem Bussystem, eine Empfängereinheit 3 zur Bereitstellung eines Empfangssignals RXD zum Übertragen des Protokolls von einem Master an einen nachgeschalteten Slave- Mikrocontroller und eine Sendeeinheit 4 zur Bereitstellung eines Sendesignals TXD zum Übertragen eines Busprotokolls vom Slave- Mikrocontroller zum Master.

Für die Verwendung der erfindungsgemäßen Schaltungsanordnung für M- oder L- Bussystem ist wie vorab erwähnt ein Spannungsbereich zwischen 4,8V und 50V vorzusehen. Um die erforderliche Reproduktion der geforderten Signalpegel zu erreichen, sind die Funktionseinheiten mit Stromquellen CC1, CC2, CC3, CC4, CC5 ausgestattet.

Ein erstes Modul 1.1 der Spannungsversorgungseinheit 1 ist aus einer als Gleichrichterschaltung ausgeführten Schutzschaltung aufgebaut, welche aus den Überspannungsschutzdioden ZD1, ZD2 und Gleichrichterdioden DD1 in Modul 1.2 bestehen und die nachfolgende Elektronik gegen eine falsche Polung der anliegenden Busspannung Ubus aus LP1, LP2 wenn ein L- Bussystem angeschlossen ist und MB1, MB2, wenn ein M- Bussystem angeschlossen ist, schützt. Zur elektrostatischen Entladung (ESD) können in vorteilhafter Weise entsprechend dimensionierte Kondensatoren (nicht dargestellt) mit jeder Überspannungsdiode verschaltet werden. Für einen zusätzlichen Überspannungsschutz kann zusätzlich auch der Einsatz einer Widerstandsanordnung (nicht dargestellt) bestehend aus Vorschaltwiderständen oder induktiven Widerständen am Eingang der Bussignale LP1 und LP2 vorgesehen sein.

In einem zweiten Modul 1.2 der Spannungsversorgungseinheit 1 ist ein Kondensator C1 zur Speicherung des oberen Spannungspegel Umark für "logisch 1 angeschlossen.

Die Batteriespannung Ubat der Spannungsversorgungseinheit wird vorzugsweise von einer Batterie bereitgestellt und über eine Entkoppeldiodenanordnung DD4 an einen Kondensator C2 angeschlossen, wie in Modul 1.3 der Spannungsversorgungseinheit 1 gezeigt.

Eine Referenzspannung Uref zur Steuerung der Stromquellen CC2, CC4 und CC5 wird über das Modul VR bereitgestellt, wobei die erzeugte Referenzspannung Uref etwas größer sein muss als die Batteriespannung Ubat um den Batteriestrom Ibat sicher abzuschalten. Für Uref > Ubat wird die linke Doppeldiode der Entkoppeldiodenanordnung DD4 für den Versorgungsstrom durchlässig und die rechte der Doppeldioden der Entkoppeldiodenanordnung DD4 gesperrt, damit fließt kein Strom mehr von der Batterie auf den Kondensator C2. Der Kondensator C2 stützt die Versorgungsspannung der nachgeschalteten Einheit bzw. des angeschlossenen Verbrauchszählers gegenüber Versorgungsstromschwankungen. Der Referenzwiderstand R4 für die vierte Stromquelle CC4 und verringert mit einem weiteren in Reihe zum Widerstand R4 beschalteten Widerstand R3 den Strom von der Stromquelle CC4.

Die Busdetektionseinheit 2 zur Erkennung des jeweils anliegenden Bussystems arbeitet gemäß der vorab genannten DIN-Normen bei ca. 17V. Der Spannungsbereich zwischen 16,5V und 17, 5V ist somit ein nicht nutzbarer Spannungsbereich, um unkontrollierte bzw. unbeabsichtigtes Schalten der anstehenden Spannungspegel der Ausgänge der Schaltungsanordnung zu vermeiden.

Die Busdetektionseinheit 2 stellt dem Eingang dem Mikrocontroller des Verbrauchszählers ein Ausgangssignal (LM_DETECT) entsprechend dem angeschlossenem Bussystems zur weiteren Verarbeitung bereit.

Die Empfängereinheit 3 umfasst eine zweite Stromquelle CC2 zur Bereitstellung der Last für den Spannungspegel Uspace. Sie dient als Referenz für den Spannungsdetektor Umark - Uspace.

Der Spannungspegel Uspace wird somit über den Spannungsdetektor VD ermittelt. Die Referenzspannung wird von der zweiten Stromquelle CC2 stabilisiert und mit einem Schaltsignal Vrxs dem in der Empfängereinheit 3 vorgesehenen Schalter S3, der mit einem zugeordnetem Schaltwiderstand R2 zusammenwirkt, für das detektierten Bussystem angepasst. Der Schaltwiderstand R2 ist als umschaltbarer Referenzwiderstand für die Stromquelle CC2 ausgeführt.

Dies gewährleistet eine konstante Detektionsspannung über den gesamten Versorgungsspannungsbereich von 4,8V und 50V.

Die ebenfalls in der Empfängereinheit 3 vorgesehene dritte Stromquelle CC3 bildet mit einer Ausgangsschaltung OP eine Pegelumsetzung für das RXD- Signal für den Mikrocontroller der nachgeschalteten Einheit. Die Ausgangsschaltung wird nachfolgend auch als Pegelumsetzter für RXD- Signal bezeichnet. Die dritte Stromquelle CC3 mit der Ausgangsschaltung OP setzt den variablen Buspegel Umark am Kondensator C1 in eine für den Mikroprozessor geeigneten Signalpegel an dessen RXD- Eingang um.

Die dritte Stromquelle CC3 ist vorzugsweise aus einem NPN- Transistor und mit der Basis des Transistors verbundenen in Reihe angeordneten entsprechend dimensionierten Widerstandsanordnung und einem mit Erde verbundenen weiteren Widerstand aufgebaut. Wegen der zu betrachtenden hohen Spannungsänderung der Busspannung Ubus wird die dritte Stromquelle CC3 erfindungsgemäß anstelle eines üblicherweise eingesetzten Widerstandes verwendet. Die dritte Stromquelle CC3 ist so ausgeführt, dass sie auch noch bei Ubus - Uspace = 4,8V - 3,0V = 1,8V stabil arbeitet.

Das detektierte Spannungsniveau für das RXD- Signal wird durch eine in der Spannungsdetektionsschaltung vorgesehene zweite Stromquelle CC2, vorzugsweise bestehend aus entsprechend dimensionierten Widerständen an Basis und Emitter eines npn-Transistor gebildet, eingestellt. Die zweite Stromquelle CC2 der Empfängereinheit 3 stabilisiert den zu detektierenden Empfangspegel über den gesamten Busspannungsbereich.

Die Busspannung Ubus ist als Umark im Kondensator C1 gespeichert. Der Spannungspegel Uspace wird mittels einer in der Sendeeinheit 4 vorgesehenen Diodenanordnung DD2 vom Kondensator C1 entkoppelt und über die zweite Stromquelle CC2 der Empfängereinheit 3 an Masse abgeleitet.

Der Spannungsdetektor VD wird von der zweiten Stromquelle CC2 stabilisiert und mit dem Umschaltsignal Vrxs, S3 und R2 gemäß dem angeschlossenem Bussystem entsprechend umgeschaltet.

Im M-Bus- Betrieb, das heißt am Schaltungseingang ML- Bus ist ein M- Busmaster angeschlossen, schaltet der Schalter S3 ein und der Widerstand R2 vergrößert den benötigten Spannungspegel für den M-Bus.

Im L-Bus- Betrieb, das heißt am Schaltungseingang ML- Bus ist ein L- Busmaster angeschlossen, schaltet der Schalter S3 aus, der Widerstand R2 wird abgeschaltet, der benötigte Spannungspegel wird für den L-Bus sensitiver.

Die Sendeeinheit 4 umfasst eine erste Stromquelle CC1 zur Erzeugung des Ispace Stromes vom TXD- Signals des Mikrocontrollers im Verbrauchszähler. Die weitere Stromquelle CC1 ist vorzugsweise aus einer in Reihe angeordneten entsprechend dimensionierten Widerstandsanordnung und einem NPN- Transistor zur Bereitstellung des Strompegels Ispace "logisch 0", aufgebaut. Der Strompegel Ispace wird über die entsprechend dimensionierte Widerstandsanordnung mit S4 und R1 geändert.

Der Ausgang des Mikrocontrollers TXD der nachgeschalteten Einheit ist auf die weitere Stromquelle CC1 geführt. Die Basis des in der weiteren Stromquelle CC1 verwendeten Transistors wird an das TXD-Signal vom Mikrocontroller mit der Spannung Vcc, welche als Referenzspannung für die erste Stromquelle CC1 dient, angeschlossen.

Im M-Bus- Betrieb, das heißt am Schaltungseingang ML- Bus ist ein M- Busmaster angeschlossen, schaltet den, vorzugsweise aus Schalttransistoren aufgebauten, Schalter S4 ein, der Widerstand R1 wird kurzgeschlossen und Imark wird auf seine gemäß der DIN EN 13757-2-2005 festgelegten Nenngröße zwischen 11... 20mA gesetzt.

Im L-Bus- Betrieb, das heißt am Schaltungseingang ML- Bus ist ein L- Busmaster angeschlossen, schaltet die Schalteranordnung S3 aus, setzen die in Reihe angeordnete entsprechend dimensionierte Widerstandsanordnung Imark auf seine gemäß der DIN EN 13757-6-2005 festgelegten Nenngröße zwischen 3 .. 6mA.

Die Funktionsweise der Datensendeeinheit 4 ist aus dem Stand der Technik bekannt und beispielsweise in Annex A in der Norm EN 13757-6-2005 beschrieben.

### Bezugszeichenliste

- 1: Spannungsversorgungseinheit
- 1.1, 1.2, 1.3: Module der Spannungsversorgungseinheit
- 2: Bussystem- Detektionseinheit
- 3: Empfängereinheit
- 4: Datensendeeinheit
- S1, S2, S4: Schalteranordnung, Schalter
- R1, R2, R3: umschaltbare Referenzwiderstände für die Stromquellen
- R4: Referenzwiderstand für die vierte Stromquelle CC4
- RXD: Empfangssignal vom Master zum Slave- Mikrocontroller, definiert die Datenübertragung vom Master zum Slave
- TXD: Sendesignal vom Slave Mikrocontroller zum Master, definiert die Datenübertragung vom Slave zum Master
- LM_DETECT: Ausgangssignal entsprechend dem anliegenden Bussystems
- OP: Pegelumsetzter für RXD- Signal
- VD: Spannungsdetektor für RXD-Signal
- CC1: Stromquelle der Sendeeinheit, erste Stromquelle
- CC2, CC3: Stromquellen der Empfängereinheit, zweite und dritte Stromquelle
- CC4, CC5: Stromquellen der Spannungsversorgungseinheit, vierte und fünfte Stromquelle
- Z3: Zehnerdiodenanordnung
- ZD1, ZD2: Überspannungs- und Gleichrichterdioden
- DD1: Gleichrichterdioden für Umark
- DD2: Gleichrichterdioden für Uspace
- DD4: Entkoppeldiodenanordnung, Batterieentkoppelung, Vref-Ankoppelung
- C1: Kondensator für Umark
- C2: Entstörung Vcc von Stromschwankungen
- MB1, MB2: Bussignal M- Bus
- LP1, LP2: Bussignal L- Bus
- Ubus: Busspannung
- Vrxs: Umschaltsignal, Schaltsignal für RXD Uspace Detektion, vom Busdetektor generierte Schaltspannung zum Schalten des Schalters S3
- Itxs: Umschaltsignal, Schaltsignal für TXD Ispace, vom Busdetektor generierte Schaltspannung zum Schalten des Schalters S4
- Iccs: weiteres Umschaltsignal, Schaltsignal für Imark und Versorgungsruhestrom, vom Busdetektor generierte Schaltspannung zum Schalten des Schalters S1
- Umark: Spannungspegel für "logisch 1"
- Uspace: Spannungspegel für "logisch 0"
- Ubat: Batteriespannung Ubat
- Uref: Referenzspannung für Vcc
- Ibat: Batteriestrom
- Imark: Strompegel für "logisch 1"
- Ispace: Strompegel für "logisch 0"
- Vcc: Versorgungsspannung für nachgeschaltete Einheit

## Patentansprüche

1. Schaltungsanordnung, die für die Datenübertragung sowohl gemäß dem Metering (M) -Busprotokoll als auch für die Datenübertragung gemäß dem Local (L) -Busprotokoll ausgelegt ist, zur automatischen Bussystemerkennung (M-Bussystem, L-Bussystem) gemäß einem jeweils anliegenden Busprotokoll (M-Busprotokoll, L-Busprotokoll) zur Verwendung in einer Einheit zur Erfassung von physikalischen Größen, wobei die Schaltungsanordnung eine Spannungsversorgungseinheit (1) zur Bereitstellung einer Versorgungsspannung, eine Empfängereinheit (3) und eine Datensendeeinheit (4) umfasst, **dadurch gekennzeichnet, dass** in der Schaltungsanordnung weiterhin eine Busdetektionseinheit (2) vorgesehen ist, welche die Signalpegel am Bus detektiert, den Typ des anliegenden Busprotokolls (M-Busprotokoll, L-Busprotokoll) erkennt und als Ausgangssignal (LM_DETECT) einem Eingang der Einheit zur Erfassung von physikalischen Größen entsprechend dem angeschlossenen Bussystem (M-Bussystem, L-Bussystem) zur weiteren Verarbeitung bereitstellt.

2. Schaltungsanordnung nach Anspruch 1, **dadurch gekennzeichnet, dass** die Empfängereinheit (3) zur Bereitstellung von Signalen des entsprechend angeschlossenem Bussystems (M-Bussystem, L-Bussystem) an einen Mikrocontrollereingang der Einheit zur Erfassung von physikalischen Größen ausgelegt ist.

3. Schaltungsanordnung nach Anspruch 2, **dadurch gekennzeichnet, dass** die Empfängereinheit (3) einen Spannungsdetektor (VD), welcher einen Spannungspegel (Uspace) ermittelt, und eine Ausgangsschaltung (OP) zur Bereitstellung und Pegelumsetzung eines Datenempfangssignals (RXD) auf eine vom Mikrocontroller der Einheit zur Erfassung von physikalischen Größen benötigte Versorgungsspannung (Vcc) aufweist.

4. Schaltungsanordnung nach Anspruch 2 oder 3, **dadurch gekennzeichnet, dass** die Datensendeeinheit (4) eines vom Mikrocontroller der Einheit zur Erfassung von physikalischen Größen bereitgestellten Datensendesignals (TXD) entsprechend dem angeschlossenen Bussystem ausgelegt ist.

5. Schaltungsanordnung nach einem der vorstehenden Ansprüche, **dadurch gekennzeichnet, dass** die Datensendeeinheit (4) eine erste Stromquelle (CC1) aufweist, die Empfängereinheit (3) eine zweite Stromquelle (CQ2) und eine dritte Stromquelle (CC3) aufweist, und die Spannungsversorgungseinheit (1) eine vierte Stromquelle (CC 4) und eine fünfte Stromquelle (CC5) aufweist.

6. Schaltungsanordnung nach einem der vorstehenden Ansprüche, **dadurch gekennzeichnet, dass** in der Busdetektionseinheit (2) eine Zenerdiodenanordnung (Z3) vorgesehen ist, welche über Signalpfade von Umschaltsignalen (Urxs, Itxs, Imark) mit Schaltern (S1, S3, S4) der Spannungsversorgungseinheit (1), der Empfängereinheit (3) und der Datensendeeinheit (4) verschaltet ist.

7. Schaltungsanordnung nach Anspruch 6, **dadurch gekennzeichnet, dass** über die Zener- Diodenanordnung (Z3) der Busdetektoreinheit (2) die von der Spannungsversorgungseinheit (1) bereitgestellte Spannung detektiert wird, unter Nutzung des Zener- Stromes der Zenerdiodenanordnung (Z3) zum Schalten der Schalter (S1, S3, S4) der Spannungsversorgungseinheit (1), der Empfängereinheit (3) und der Datensendeeinheit (4).

8. Schaltungsanordnung nach Anspruch 5, **dadurch gekennzeichnet, dass** die vierte Stromquelle (CC4) der Spannungsversorgungseinheit (1) den Zener- Strom der Zenerdiodenanordnung (Z3) zur Bereitstellung von Änderungen des Strompegels (Imark) erfasst.

9. Schaltungsanordnung nach Anspruch 8, **dadurch gekennzeichnet, dass** die mit einer Referenzspannung (Vref) gesteuerte fünfte Stromquelle (CC5) der Spannungsversorgungseinheit (1) den Strompegel (Imark) der vierten Stromquelle (CC4) der Spannungsversorgungseinheit (1) stabilisiert.

10. Schaltungsanordnung nach einem der Ansprüche 8 oder 9, **dadurch gekennzeichnet, dass** der durch die Zenerdiodenanordnung (Z3) fließende Zenerstrom auch die Auswahl der Größe des Strompegels (Imark) durch Schalten des Schalters (S1) der Spannungsversorgungseinheit (1) beeinflusst.

11. Schaltungsanordnung nach einem der Ansprüche 5 oder 6, **dadurch gekennzeichnet, dass** der Ruhestrom der vierten Stromquelle (CC4) der Spannungsversorgungseinheit (1) mit der in der Spannungsversorgungseinheit (1) integrierten fünften Stromquelle (CC5) stabilisiert wird, um Änderungen des Strompegels (Imark) über den Betriebsspannungsbereich zu vermeiden.

12. Schaltungsanordnung nach Anspruch 8, **dadurch gekennzeichnet, dass** die mit einer Referenzspannung (Vref) gesteuerte fünfte Stromquelle (CC5) der Spannungsversorgungseinheit (1) den Strompegel (Imark) der vierten Stromquelle (CC4) der Spannungsversorgungseinheit (1) stabilisiert, deren Strom mit einem weiteren Umschaltsignal (Iccs), dem Schalter (S1) und einem Referenzwiderstand (R3) der Spannungsversorgungseinheit (1) umgeschaltet wird.

13. Verwendung der Schaltungsanordnung nach einem der vorstehenden Ansprüche 1 bis 12 in einer Einheit zur Erfassung von physikalischen Größen.

## Claims

1. Circuit arrangement, which is designed for the transfer of data both in accordance with the Meter (M) bus protocol and for the transfer of data in accordance with the Local (L) bus protocol, for automatic bus system identification (M-bus system, L-bus system) in accordance with a respectively present bus protocol (M-bus protocol, L-bus protocol) for use in a unit for capturing physical variables, wherein the circuit arrangement comprises a voltage supply unit (1) for providing a supply voltage, a receiver unit (3) and a data transmission unit (4), **characterized in that** a bus detection unit (2) is also provided in the circuit arrangement, which bus detection unit detects the signal level at the bus, identifies the type of bus protocol (M-bus protocol, L-bus protocol) present and provides this as output signal (LM_DETECT) to an input of the unit for capturing physical variables according to the connected bus system (M-bus system, L-bus system) for further processing.

2. Circuit arrangement according to Claim 1, **characterized in that** the receiver unit (3) is designed to provide signals of the accordingly connected bus system (M-bus system, L-bus system) to a microcontroller input of the unit for capturing physical variables.

3. Circuit arrangement according to Claim 2, **characterized in that** the receiver unit (3) has a voltage detector (VD), which ascertains a voltage level (Uspace), and an output circuit (OP) for providing and converting the level of a data reception signal (RXD) to a supply voltage (Vcc) required by the microcontroller of the unit for capturing physical variables.

4. Circuit arrangement according to Claim 2 or 3, **characterized in that** the data transmission unit (4) of a data transmission signal (TXD) provided by the microcontroller of the unit for capturing physical variables is designed according to the connected bus system.

5. Circuit arrangement according to one of the preceding claims, **characterized in that** the data transmission unit (4) has a first current source (CC1), the receiver unit (3) has a second current source (CC2) and a third current source (CC3), and the voltage supply unit (1) has a fourth current source (CC4) and a fifth current source (CC5).

6. Circuit arrangement according to one of the preceding claims, **characterized in that** a Zener diode arrangement (Z3) is provided in the bus detection unit (2), which Zener diode arrangement is interconnected with switches (S1, S3, S4) of the voltage supply unit (1), of the receiver unit (3) and of the data transmission unit (4) by means of signal paths of switchover signals (Urxs, Itxs, Imark).

7. Circuit arrangement according to Claim 6, **characterized in that** the voltage provided by the voltage supply unit (1) is detected by means of the Zener diode arrangement (Z3) of the bus detector unit (2) using the Zener current of the Zener diode arrangement (Z3) for switching the switches (S1, S3, S4) of the voltage supply unit (1), of the receiver unit (3) and of the data transmission unit (4).

8. Circuit arrangement according to Claim 5, **characterized in that** the fourth current source (CC4) of the voltage supply unit (1) captures the Zener current of the Zener diode arrangement (Z3) for providing changes of the current level (Imark).

9. Circuit arrangement according to Claim 8, **characterized in that** the fifth current source (CC5) of the voltage supply unit (1), which fifth current source is controlled using a reference voltage (Vref), stabilizes the current level (Imark) of the fourth current source (CC4) of the voltage supply unit (1).

10. Circuit arrangement according to either of Claims 8 and 9, **characterized in that** the Zener current flowing through the Zener diode arrangement (Z3) also influences the selection of the variable of the current level (Imark) by switching the switch (S1) of the voltage supply unit (1).

11. Circuit arrangement according to either of Claims 5 and 6, **characterized in that** the quiescent current of the fourth current source (CC4) of the voltage supply unit (1) is stabilized using the fifth current source (CC5) integrated in the voltage supply unit (1) in order to prevent changes of the current level (Imark) over the operating voltage range.

12. Circuit arrangement according to Claim 8, **characterized in that** the fifth current source (CC5) of the voltage supply unit (1), which fifth current source is controlled using a reference voltage (Vref), stabilizes the current level (Imark) of the fourth current source (CC4) of the voltage supply unit (1), the current of which fourth current source is switched over using a further switchover signal (Iccs), the switch (S1) and a reference resistor (R3) of the voltage supply unit (1).

13. Use of the circuit arrangement according to one of the preceding Claims 1 to 12 in a unit for capturing physical variables.

## Revendications

1. Arrangement de circuit qui est conçu pour la transmission de données à la fois selon le protocole de bus Metering (M) et selon le protocole de bus Local (L), pour la reconnaissance automatique du système de bus (système de bus M, système de bus L) conformément à un protocole de bus (protocole de bus M, protocole de bus L) respectivement appliqué, destiné à être utilisé dans une unité servant à acquérir des grandeurs physiques, l'arrangement de circuit comprenant une unité d'alimentation électrique (1) destinée à fournir une tension d'alimentation, une unité de réception (3) et une unité d'émission de données (4), **caractérisé en ce que** dans l'arrangement de circuit se trouve en outre une unité de détection de bus (2) qui détecte le niveau de signal sur le bus, reconnaît le type du protocole de bus (protocole de bus M, protocole de bus L) appliqué et le délivre en tant que signal de sortie (LM_DETECT) à une entrée de l'unité servant à acquérir des grandeurs physiques conformément au système de bus (système de bus M, système de bus L) en vue du traitement postérieur.

2. Arrangement de circuit selon la revendication 1, **caractérisé en ce que** l'unité de réception (3) est conçue pour délivrer les signaux du système de bus (système de bus M, système de bus L) raccordé correspondant à une entrée de microcontrôleur de l'unité servant à acquérir des grandeurs physiques.

3. Arrangement de circuit selon la revendication 2, **caractérisé en ce que** l'unité de réception (3) possède un détecteur de tension (VD), qui détermine un niveau de tension (Uspace), et un circuit de sortie (OP) destiné à délivrer et à convertir en niveau un signal de réception de données (RXD) à une tension d'alimentation (Vcc) requise par le microcontrôleur de l'unité servant à acquérir des grandeurs physiques.

4. Arrangement de circuit selon la revendication 2 ou 3, **caractérisé en ce que** l'unité d'émission de données (4) d'un signal d'émission de données (TXD) délivré par le microcontrôleur de l'unité servant à acquérir des grandeurs physiques est conçue en fonction du système de bus raccordé.

5. Arrangement de circuit selon l'une des revendications précédentes, **caractérisé en ce que** l'unité d'émission de données (4) possède une première source de courant (CC1), l'unité de réception (3) possède une deuxième source de courant (CC2) et une troisième source de courant (CC3) et l'unité d'alimentation électrique (1) possède une quatrième source de courant (CC4) et une cinquième source de courant (CC5).

6. Arrangement de circuit selon l'une des revendications précédentes, **caractérisé en ce qu'**un arrangement de diodes Zener (Z3) se trouve dans l'unité de détection de bus (2), lequel est connecté par le biais de trajets de signaux de permutation (Urxs, Itxs, Imark) avec des commutateurs (S1, S2, S3) de l'unité d'alimentation électrique (1), de l'unité de réception (3) et de l'unité d'émission de données (4).

7. Arrangement de circuit selon la revendication 6, **caractérisé en ce que** la tension délivrée par l'unité d'alimentation électrique (1) est détectée par le biais de l'arrangement de diodes Zener (Z3) de l'unité de détection de bus (2) en utilisant le courant de Zener de l'arrangement de diodes Zener (Z3) pour commuter les commutateurs (S1, S3, S4) de l'unité d'alimentation électrique (1), de l'unité de réception (3) et de l'unité d'émission de données (4).

8. Arrangement de circuit selon la revendication 5, **caractérisé en ce que** la quatrième source de courant (CC4) de l'unité d'alimentation électrique (1) détecte le courant de Zener de l'arrangement de diodes Zener (Z3) pour fournir des variations du niveau de courant (Imark).

9. Arrangement de circuit selon la revendication 8, **caractérisé en ce que** la cinquième source de courant (CC5) de l'unité d'alimentation électrique (1) commandée par une tension de référence (Vref) stabilise le niveau de courant (Imark) de la quatrième source de courant (CC4) de l'unité d'alimentation électrique (1).

10. Arrangement de circuit selon l'une des revendications 8 ou 9, **caractérisé en ce que** le courant de Zener qui circule à travers l'arrangement de diodes Zener (Z3) influence également la sélection de la grandeur du niveau de courant (Imark) en commutant le commutateur (S1) de l'unité d'alimentation électrique (1).

11. Arrangement de circuit selon l'une des revendications 5 ou 6, **caractérisé en ce que** le courant de repos de la quatrième source de courant (CC4) de l'unité d'alimentation électrique (1) est stabilisé avec la cinquième source de courant (CC5) intégrée dans l'unité d'alimentation électrique (1) afin d'éviter des variations du niveau de courant (Imark) sur la plage de tensions de fonctionnement.

12. Arrangement de circuit selon la revendication 8, **caractérisé en ce que** la cinquième source de courant (CC5) de l'unité d'alimentation électrique (1) commande par une tension de référence (Vref) stabilise le niveau de courant (Imark) de la quatrième source de courant (CC4) de l'unité d'alimentation électrique (1) dont le courant est permuté avec un signal de permutation (Iccs) supplémentaire, le commutateur (S1) et une résistance de référence (R3) de l'unité d'alimentation électrique (1).

13. Utilisation d'un arrangement de circuit selon l'une des revendications précédentes 1 à 12 dans une unité servant à acquérir des grandeurs physiques.
